# EUROPEAN PATENT SPECIFICATION

(11) **EP 4 407 649 B1**
(45) Date of publication and mention of the grant of the patent: **19.11.2025**
(21) Application number: 23825952.7
(22) Date of filing: 27.04.2023
(51) Int. Cl.: G06F 3/02, H01H 3/12, H01H 13/70, H01H 13/705, H01H 13/7065, H01H 13/84, H01H 13/85

(54) **KEYBOARD AND ELECTRONIC DEVICE**
TASTATUR UND ELEKTRONISCHE VORRICHTUNG
CLAVIER ET DISPOSITIF ÉLECTRONIQUE

(30) Priority: 23.06.2022 CN 202210716989
(43) Date of publication of application: 31.07.2024
(73) Proprietor: Honor Device Co., Ltd., Shenzhen, Guangdong 518040 (CN)
(72) Inventor: LEI, Pingping, Shenzhen, Guangdong 518040 (CN); LI, Haitao, Shenzhen, Guangdong 518040 (CN); LI, Kuang, Shenzhen, Guangdong 518040 (CN); XU, Huijie, Shenzhen, Guangdong 518040 (CN)
(74) Representative: Epping - Hermann - Fischer
(86) International application number: PCT/CN2023/091146
(87) International publication number: WO 2023/246299

(56) References cited:
- CN-A- 101 436 481
- CN-A- 107 492 462
- CN-A- 116 053 067
- US-A1- 2019 096 604
- US-A1- 2019 287 744

## Description

This application claims priority to Chinese Patent Application No. 202210716989.0, filed with the China National Intellectual Property Administration on June 23, 2022 and entitled "KEYBOARD AND ELECTRONIC DEVICE'.

### TECHNICAL FIELD

This application relates to the field of electronic device technologies, and in particular, to a keyboard and an electronic device.

### BACKGROUND

With the continuous development of electronic technologies, an electronic device such as a laptop and a desktop computer are widely used in user's daily life and work, bringing great convenience to user's daily life and work.

As one of the important parts of an electronic device such as a laptop and a desktop computer, a keyboard is a main input device for usage scenarios such as office and study, so that users have increasingly higher expectations for various features of the keyboard.

For users who often use keyboard input for work and study, users not only have keyboard requirements for the experience of a hand feeling, but also have increasing requirements for the experience of key silence. Therefore, how to lower the sound when keys are pressed is an urgent problem that needs to be resolved by those skilled in the art.

US 2019/0096604 A1 relates to a keypad module, comprising a bottom plate; a circuit film, disposed on the bottom plate and comprising a switch; an elastic element, disposed on the switch; a scissor structure, fixed on the bottom plate; a keycap, disposed on the scissor structure; and a buffering material layer, disposed on an inner surface of the keycap, wherein an area of the buffering material layer is smaller than an area of the inner surface of the key cap.

### SUMMARY

To resolve the foregoing technical problem, this application provides a keyboard and an electronic device. In this way, press buffering and noise reduction can be implemented. The invention is set out in the appended claims.

According to a first aspect, an embodiment of this application provides a keyboard, including a support plate and a plurality of keys. The plurality of keys are located on one side of the support plate. Each key includes a key cap and a lifting/lowering assembly, and the lifting/lowering assembly is located between the support plate and the key cap. The key cap includes an outer surface and an inner surface opposite to the outer surface. A first clamping part and a second clamping part are provided on the inner surface. The lifting/lowering assembly includes a first support and a second support. The first support and the second support each include a first end and a second end. The first end of the first support is connected to the first clamping part, and the second end of the first support is connected to the support plate. The first end of the second support is connected to the second clamping part, and the second end of the second support is connected to the support plate. A first buffer structure is further provided on the inner surface of the key cap. When the key cap is pressed, the second end of the first support is in contact with the first buffer structure, and the second end of the second support is in contact with the first buffer structure.

The first buffer structure is provided on the key cap, so that the lifting/lowering assembly is in contact with the first buffer structure on the key cap when the key cap is pressed. In this way, when a user taps the key, the first buffer structure can function as a buffer collision between the key cap and the lifting/lowering assembly, thereby lowering the sound of tapping keys, preventing the lifting/lowering assembly from being in contact with the key cap, causing large impact noise, and improving user experience.

For example, the first end of the first support is a first sliding end in the embodiment, the second end of the first support is a first rotating end in the embodiment, the first end of the second support is a second rotating end in the embodiment, and the second end of the second support is a second sliding end in the embodiment.

Second buffer structures are provided on both the first end of the first support and the first end of the second support. When the key cap is pressed, the support plate is in contact with one of the second buffer structures located on the first end of the first support and the other one of the second buffer structures located on the first end of the second support. This prevents the first sliding end of the first support and the second rotating end of the second support from colliding with the support plate due to a large impact, thereby causing large impact noise.

**In** some possible implementations, the first clamping part includes two first clamping sub-parts located at two opposite ends of the inner surface, and the second clamping part includes two second clamping sub-parts located at two opposite ends of the inner surface. The first support includes a first sliding end and a first rotating end. The first end of the first support is the first sliding end, the first sliding end includes two first clamping shafts, and the two first clamping shafts are slidingly connected to the two first clamping sub-parts in a one-to-one correspondence. One end of the first support connected to the support plate is the first rotating end, and the first rotating end is rotatably connected to the support plate. The second support includes a second sliding end and a second rotating end. The first end of the second support is the second rotating end, the second rotating end includes two second clamping shafts, and the two second clamping shafts are rotatably connected to the two second clamping sub-parts in a one-to-one correspondence. The second end of the second support is the second sliding end, and the second sliding end is slidingly connected to the support plate. **In** other words, the lifting/lowering assembly includes a scissor-leg support that has a good hand feeling when keys are pressed. Of course, the lifting/lowering assembly is not limited to the scissor-leg support, and those skilled in the art can choose the support according to actual conditions.

In some possible implementations, the first clamping part includes two first clamping sub-parts located at two opposite ends of the inner surface, the second clamping part includes two second clamping sub-parts located at two opposite ends of the inner surface, based on this, the first buffer structure extends between the two first clamping sub-parts and between the two second clamping sub-parts. In this way, the first buffer structure can also buffer a collision between the first sliding end of the first support and the second rotating end of the second support as well as the key cap, to further reduce the sound of tapping keys.

In some possible implementations, the key cap includes a first slot, and the key cap is partially recessed from the inner surface in a direction from the inner surface to the outer surface, to form the first slot. The first buffer structure is located in the first slot. This increases a bonding area between the first buffer structure and the key cap, and prevents the first buffer structure from being separated from the inner surface of the key cap.

In some possible implementations, the key cap includes the first slot, and the first buffer structure is located in the first slot, based on this, the outer surface of the first buffer structure can be flush with the inner surface or can protrude from the inner surface. When the outer surface of the first buffer structure protrudes from the inner surface, contact between the support and the key cap can be basically avoided, and impact noise is better.

In some possible implementations, the first buffer structure includes a plurality of buffer strips. When the key cap is pressed, the second end of the first support is in contact with at least one of the buffer strips, and the second end of the second support is in contact with at least one of the buffer strips. Of course, a shape of the first buffer structure is not limited to a strip structure, that is, the shape is not limited to each buffer strip. In other optional embodiments, the shape of the first buffer structure may also be a circle, a square, and the like.

In some possible implementations, the first buffer structure includes a plurality of buffer strips, based on this, the plurality of buffer strips include two buffer strips, and the two buffer strips include a first buffer strip and a second buffer strip. When the key cap is pressed, the second end of the first support is in contact with the first buffer strip, and the second end of the second support is in contact with the second buffer strip. In addition, a distance from two opposite sides of the second end of the first support to the first buffer strip is the same, and a distance from two opposite sides of the second end of the second support to the second buffer strip is the same. With the arrangement, costs can be reduced with a small quantity of buffer strips.

In some possible implementations, the first buffer structure includes a plurality of buffer strips, based on this, the first buffer structure includes four buffer strips, and the two buffer strips are first buffer strips. The other two buffer strips are second buffer strips. When the key cap is pressed, the second end of the first support is in contact with the two first buffer strips, and the second end of the second support is in contact with the two second buffer strips. In addition, a distance from the two first buffer strips to two opposite sides of the second end of the first support is the same, and a distance from the two second buffer strips to two opposite sides of the second end of the second support is the same. With the arrangement, costs can be reduced with a small quantity of buffer strips. In addition, stability of the first rotating end and the second sliding end during pressing is improved.

In some possible implementations, the first buffer structure includes four buffer strips, based on this, the first buffer strip extends between the two second clamping sub-parts, and the second buffer strip extends between the two first clamping sub-parts. A minimum distance from the first buffer strip to the second clamping sub-part is greater than or equal to 2 mm, and a minimum distance from the second buffer strip to the first clamping sub-part is greater than or equal to 2 mm. In other words, there is a specific distance between the buffer strip and the first clamping sub-part as well as the second clamping sub-part. In this way, a first clamping shaft of the first sliding end is not affected to slide in a sliding slot of the first clamping sub-part, in addition, a second clamping shaft of the first rotating end is not affected to rotate in a clamping slot of the second clamping sub-part, to avoid jamming keys.

In some possible implementations, the first buffer structure includes a first surface and a second surface opposite to the first surface, and the second surface is located on one side of the first surface facing away from the outer surface. A distance from the second surface to the inner surface is less than or equal to 0.15 mm. In other words, a thickness of the first buffer structure is small, with the arrangement, a buffering function may be achieved without affecting a movement of the lifting/lowering assembly.

In some possible implementations, the first buffer structure is formed by using a glue dispensing process and a two-color injection molding process.

In some possible implementations, the second buffer structures are provided on both the first end of the first support and the first end of the second support, based on this, the first support includes a third surface and a fourth surface opposite to the third surface, and the fourth surface is located on one side of the third surface facing away from the inner surface. The second support includes a fifth surface and a sixth surface opposite to the fifth surface, and the sixth surface is located on one side of the fifth surface facing away from the inner surface. The first end of the first support is provided with a second slot, and the first support is partially recessed from the fourth surface in a direction from the fourth surface to the third surface, to form the second slot. The first end of the second support includes a third slot, and the second support is partially recessed from the sixth surface in a direction from the sixth surface to the fifth surface, to form the third slot. The second buffer structure located on the first end of the first support is located in the second slot, and the second buffer structure located on the first end of second support is located in the third slot, to increase a bonding area between the second buffer structure and the first support as well as the second support.

In some possible implementations, the second buffer structure located on one end in which the first support is connected to the support plate is located in the second slot. The second buffer structure located on one end in which the second support is connected to the support plate is located in the third slot, based on this, the second buffer structure located in the second slot protrudes from the fourth surface. In addition, the second buffer structure located in the third slot protrudes from the sixth surface, so that the first sliding end of the first support and the second rotating end of the second support cannot be in contact with the support plate, thereby avoiding a collision.

In some possible implementations, the second buffer structures are provided on both the first end of the first support and the first end of the second support, based on this, a distance from the second buffer structure located on the first end of the first support to two opposite sides of the first end of the first support is the same. A distance from the second buffer structure located on the first end of the second support to two opposite sides of the first end of the second support is the same. With the arrangement, costs and an assembly process can be reduced with a small quantity of the second buffer structures.

According to a second aspect, an embodiment of this application further provides an electronic device, including the keyboard in the first aspect. The electronic device and the keyboard have the same having effects.

In some possible implementations, the electronic device includes a laptop. When a user uses the laptop, the sound of tapping keys is small, thereby improving user experience.

### BRIEF DESCRIPTION OF DRAWINGS

FIG. 1 is a schematic diagram of a structure of a laptop in an unfolded state according to an embodiment of this application;
FIG. 2 is a schematic diagram of a structure of a laptop lid being closed according to an embodiment of this application;
FIG. 3 is a schematic front view of a structure of a keyboard according to an embodiment of this application;
FIG. 4 is a schematic bottom view of a structure of a keyboard according to an embodiment of this application;
FIG. 5 is an exploded view of a keyboard according to an embodiment of this application;
FIG. 6 is a schematic diagram of a structure of a single key position of a key in an unfolded state according to an embodiment of this application;
FIG. 7 is a schematic diagram of a structure of key caps in a keyboard according to an embodiment of this application;
FIG. 8 is a locally enlarged view of a region AA in FIG. 7;
FIG. 9 is an exploded view of the key cap in FIG. 8;
FIG. 10 is a schematic diagram of a structure of a lifting/lowering assembly according to an embodiment of this application;
FIG. 11 is a schematic diagram of a structure of a first support according to an embodiment of this application;
FIG. 12 is a schematic diagram of a structure of a second support according to an embodiment of this application;
FIG. 13 is a schematic top view of a structure of a flexible circuit board according to an embodiment of this application;
FIG. 14 is a schematic side view of a structure of a flexible circuit board according to an embodiment of this application;
FIG. 15 is a schematic top view of a structure of a support plate according to an embodiment of this application;
FIG. 16 is a schematic side view of a structure of a support plate according to an embodiment of this application;
FIG. 17 is a schematic diagram of a structure of a single key position of a key in a folded state according to an embodiment of this application;
FIG. 18 is a schematic diagram of a single key position of a key in a folded state according to an embodiment of this application;
FIG. 19 is a schematic bottom view of a structure of a key cap and a lifting/lowering assembly according to an embodiment of this application;
FIG. 20 is a schematic diagram of a structure of a single key position of another key in an unfolded state according to an embodiment of this application;
FIG. 21 is a schematic bottom view of a structure of another key cap and lifting/lowering assembly according to an embodiment of this application;
FIG. 22 is a schematic diagram of a structure of a single key position of another key in an unfolded state according to an embodiment of this application;
FIG. 23 is a schematic diagram of a structure of another lifting/lowering assembly according to an embodiment of this application;
FIG. 24 is an exploded view of a lifting/lowering assembly according to an embodiment of this application; and
FIG. 25 is a schematic bottom view of a structure of a lifting/lowering assembly according to an embodiment of this application.
10: display part; 20: main body; 100: laptop;
21: main housing; 22: keyboard; 23: touchpad; 24: support plate; 25: flexible circuit board; 26: key; 27: key cap; 28: lifting/lowering assembly;
241: first hook; 242: second hook;
251: switch circuit; 252: silicone contact;
271: outer surface; 272: inner surface; 273: first clamping part; 274: second clamping part; 275: first buffer structure; 276: first slot;
2731: first clamping sub-part; 2732: sliding slot; 2741: second clamping sub-part; 2741a: first sub-part; 2741b: second sub-part; 2741c: third sub-part; 2741d: clamping slot; 2751: buffer strip; 2751a: first surface; 2751b: second surface; 2751c: first buffer strip; 2751d: second buffer strip;
281: first support; 282: second support; 283: second buffer structure;
2811: first sliding end; 2813: first side wall; 2812: first rotating end; 2814: second side wall; 2815: first accommodating cavity; 2816: first clamping shaft; 2817: second clamping shaft; 2818: limiting hole; 2821: second sliding end; 2823: third side wall; 2822: second rotating end; 2824: fourth side wall; 2825: second accommodating cavity; 2826: first mounting slot; 2827: second mounting slot; 2828: third clamping shaft; 2829: fourth clamping shaft; 2830: rotating shaft.

### DESCRIPTION OF EMBODIMENTS

The technical solutions in embodiments of this application are clearly and completely described below with reference to the accompanying drawings in embodiments of this application. Apparently, the described embodiments are merely some rather than all of the embodiments of this application. All other embodiments obtained by a person of ordinary skill in the art based on embodiments of this application without making creative efforts shall fall within the protection scope of this application.

The term "and/or" used herein describes only an association relationship for describing associated objects and represents that three relationships may exist. For example, A and/or B may represent the following three cases: only A exists, both A and B exist, and only B exists.

In the specification and claims in embodiments of this application, the terms "first", "second", and the like are intended to distinguish between different objects but do not indicate a particular order of the objects. For example, a first target object and a second target object are intended to distinguish between different target objects, but do not indicate a particular order of the target objects.

In embodiments of this application, the term "example" or "for example" is used to represent giving an example, an illustration, or a description. Any embodiment or design scheme described by using "example" or "for example" in embodiments of this application should not be explained as being more preferred or having more advantages than another embodiment or design scheme. In particular, the terms such as "example" and "for example" used herein are intended to present the related concept in a specific implementation.

In the description of embodiments of this application, unless otherwise stated, "a plurality of" means two or more. For example, a plurality of processing units refer to two or more processing units, and a plurality of systems refer to two or more systems.

A keyboard, as a primary input device for scenarios such as office and study, users have increasing higher expectations for features of the keyboard such as key silence. The keyboard usually includes a support plate, a flexible circuit board disposed on the support plate, and a plurality of keys located on one side of the flexible circuit board facing away from the support plate. Each key includes a key cap and a lifting/lowering assembly located between the key cap and the flexible circuit board. During a process of pressing the key cap to implement pressing and triggering as well as key cap returning, the lifting/lowering assembly is used for basic support. The applicant found through a research that when a user taps the keyboard, that is, when the key cap and the lifting/lowering assembly are pressed, there is a collision between the key cap and the lifting/lowering assembly, thereby causing large impact noise and poor user experience.

Based on this, an embodiment of this application provides a keyboard. A first buffer structure is provided on a key cap, so that a lifting/lowering assembly is in contact with the first buffer structure on the key cap when the key cap is pressed. In this way, when a user taps the key, the first buffer structure can function as a buffer collision between the key cap and the lifting/lowering assembly, thereby lowering the sound of tapping keys, preventing the lifting/lowering assembly from being in contact with the key cap, causing large impact noise, and improving user experience.

The keyboard provided in embodiments of this application can be applied to an electronic device. The electronic device includes but is not limited to a laptop, a desktop computer, a tablet computer, a handheld computer (Personal Digital Assistant, PDA), a mobile phone, a calculator, a gamepad, or the like. In other words, the keyboard includes but is not limited to a laptop keyboard, an ultrathin keyboard for a desktop computer, keyboard covers for such as a light office tablet or a handheld computer (Personal Digital Assistant, PDA), or a small keyboard adapted to a mobile phone, a calculator or a keyboard on a game controller, or the like.

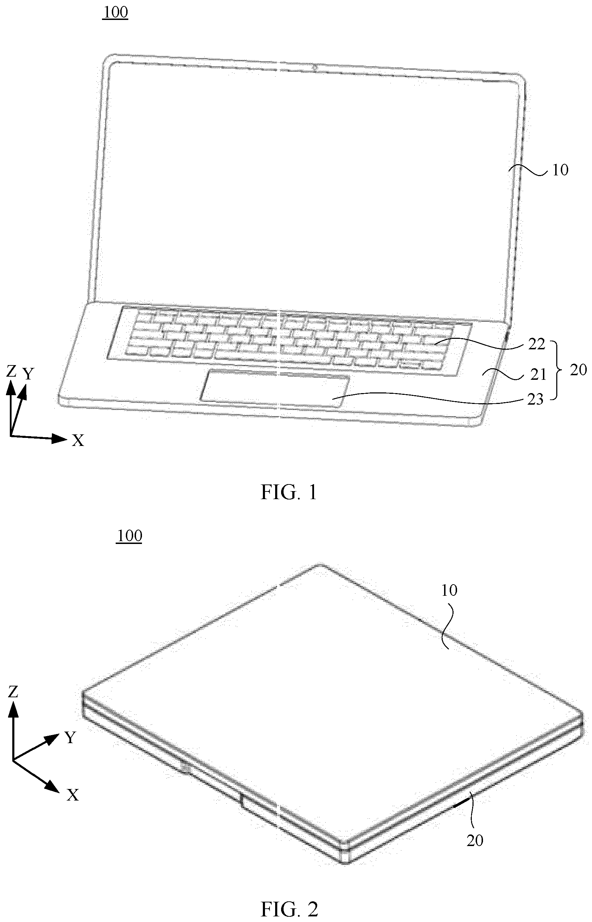

A structure of the keyboard and a principle of reducing impact noise provided in embodiments of this application are described using an example below with reference to the electronic device. As shown in FIG. 1 and FIG. 2, for ease of explanation, an example in which an electronic device is a laptop is used for description. FIG. 1 is a schematic diagram of a structure of a laptop in an unfolded state, and FIG. 2 is a schematic diagram of a structure of a laptop lid being closed.

To facilitate the clear descriptions of subsequent structural features and positional relationships of the structural features, an X-axis direction, a Y-axis direction, and a Z-axis direction are used to define the positional relationships of structures in the laptop. The X-axis direction is a width direction of the laptop lid being closed, the Y-axis direction is a length direction of the laptop lid being closed, and the Z-axis direction is a thickness direction of the laptop lid being closed.

Refer to FIG. 1 and FIG. 2, the laptop 100 includes a display part 10 and a main body 20. The display part 10 and the main body 20 are connected, for example, via a rotating shaft (not shown). The display part 10 includes a display screen, for example, the display screen is used to convert a video signal output by the main body 20 into an image for display. The main body 20 is used for processing information, data, and the like. The main body 20 includes a main body housing 21, a keyboard 22, and a touchpad 23. The main body housing 21, the keyboard 22, and the touchpad 23 can form an accommodating cavity. Structures such as a printed circuit board, a processor, and a battery (not shown) are provided in the accommodating cavity.

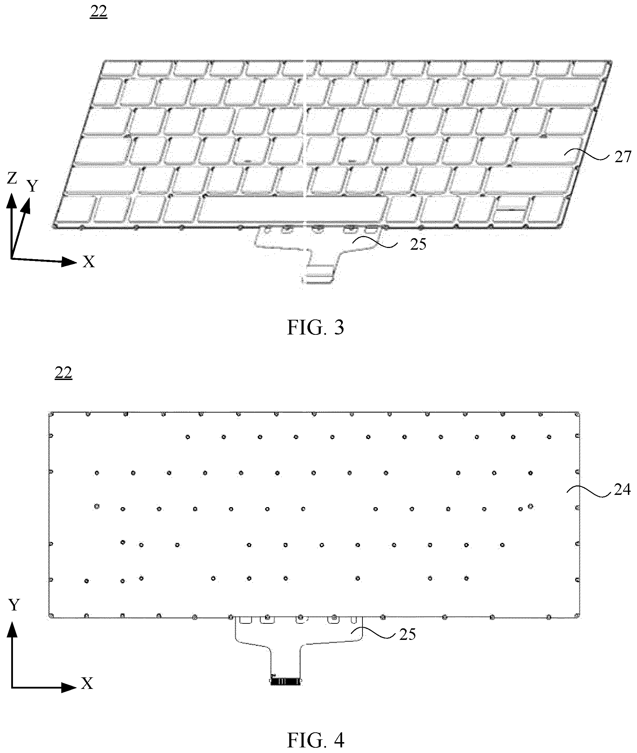

Refer to FIG. 3 to FIG. 6, the keyboard 22 includes a support plate 24, a flexible circuit board 25 located on one side of the support plate 24, and a plurality of keys 26 located on one side of the flexible circuit board 25 facing away from the support plate 24. Each key 26 includes a key cap 27 and a lifting/lowering assembly 28, and the lifting/lowering assembly 28 is located between the key cap 27 and the flexible circuit board 25.

The key cap 27 includes an outer surface 271 and an inner surface 272 in the Z-axis direction. The outer surface 271 is located on one side of the inner surface 272 facing away from the lifting/lowering assembly 28. The outer surface 271 is a pressed surface when a user presses.

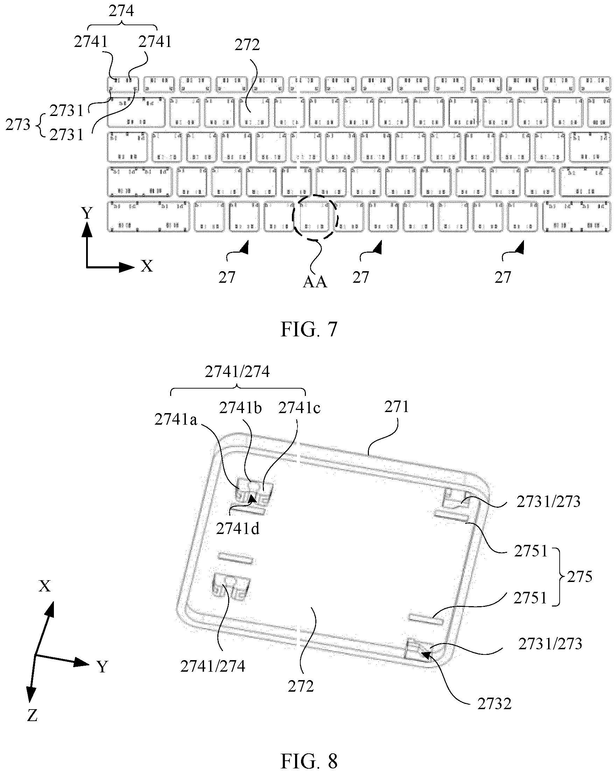

With reference to FIG. 7 and FIG. 8, a first clamping part 273 and a second clamping part 274 are provided on the inner surface 272. In the Y-axis direction, the first clamping part 273 and the second clamping part 274 are located at two opposite ends of the inner surface 272. In some embodiments, the periphery of the key cap 27 is folded 90° to form a key cap with a cavity structure, as shown in FIG. 8.

In the X-axis direction, the first clamping part 273 includes two first clamping sub-parts 2731 located at two opposite ends of the inner surface 272. Each first clamping sub-part 2731 is provided with a sliding slot 2732.

In the X-axis direction, the second clamping part 274 includes two second clamping sub-parts 2741 located at two opposite ends of the inner surface 272. The second clamping sub-part 2741 includes a first sub-part 2741a, a second sub-part 2741b, and a third sub-part 2741c. The second sub-part 2741b is connected between the first sub-part 2741a and the third sub-part 2741c. The second sub-part 2741b is in contact with the inner surface 272, an extending direction of the third sub-part 2741c is different from an extending direction of the second sub-part 2741b, and an extending direction of the first sub-part 2741a is different from an extending direction of the second sub-part 2741b. For example, the extending direction of the third sub-part 2741c is perpendicular to the extending direction of the second sub-part 2741b, and the extending direction of the first sub-part 2741a is perpendicular to the extending direction of the second sub-part 2741b, so that a clamping slot 2741d is formed between the first sub-part 2741a, the second sub-part 2741b, and the third sub-part 2741c.

A first buffer structure 275 is further provided on the inner surface 272 of the key cap 27. A specific position of the first buffer structure 275 is introduced below, and details are not be described again here.

The first buffer structure 275 includes, for example, a plurality of buffer strips 2751, and an extending direction of each buffer strip 2751 is parallel to the Y-axis direction.

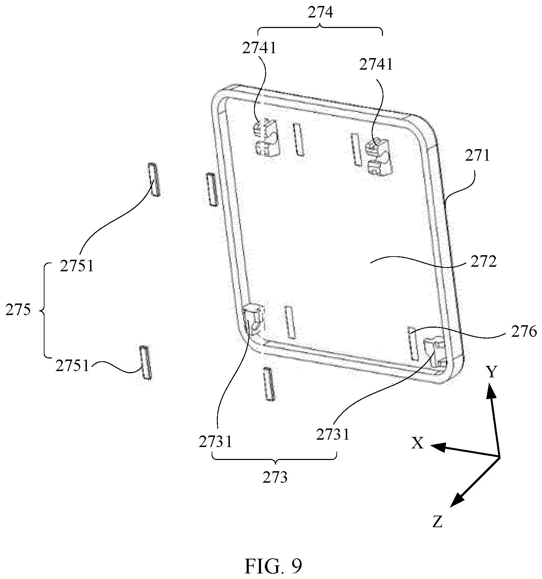

To increase a bonding area between each buffer strip 2751 and the key cap 27, and prevent the buffer strip 2751 from being separated from the inner surface 272, with reference to FIG. 9, the key cap 27 is also provided with a plurality of first slots 276. The key cap 27 is partially recessed from the inner surface 272 in a direction from the inner surface 272 to the outer surface 271, to form the first slot 276. The plurality of buffer strips 2751 are disposed in the plurality of first slots 276 in a one-to-one correspondence. Each buffer strip 2751 can be aligned with each first slot 276, that is, a surface of the buffer strip 2751 exposed to the outside is flush with the inner surface 272, and each buffer strip 2751 can also protrude from each first slot 276, that is, the surface of the buffer strip 2751 exposed to the outside is higher than the inner surface 272.

Of course, a shape of the first buffer structure 275 is not limited to a strip structure, that is, the shape is not limited to each buffer strip. In other optional embodiments, the shape of the first buffer structure 275 may also be a circle, a square, and the like.

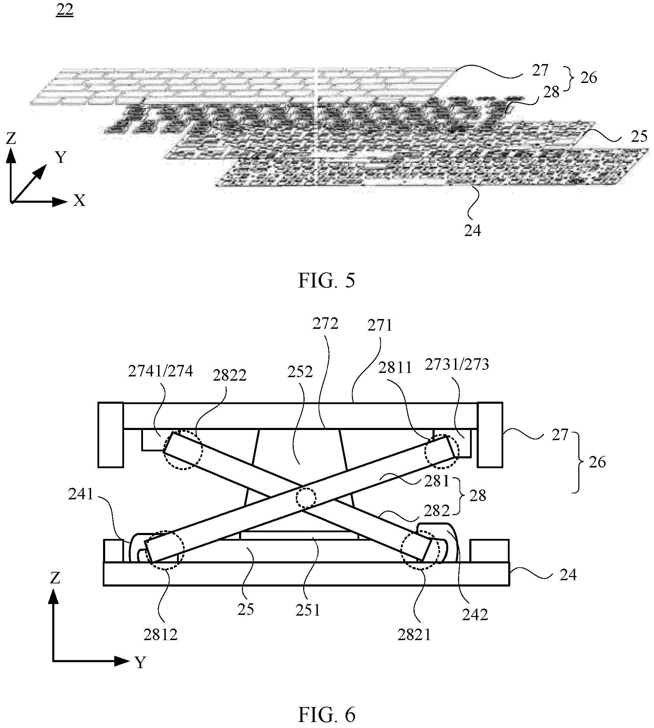

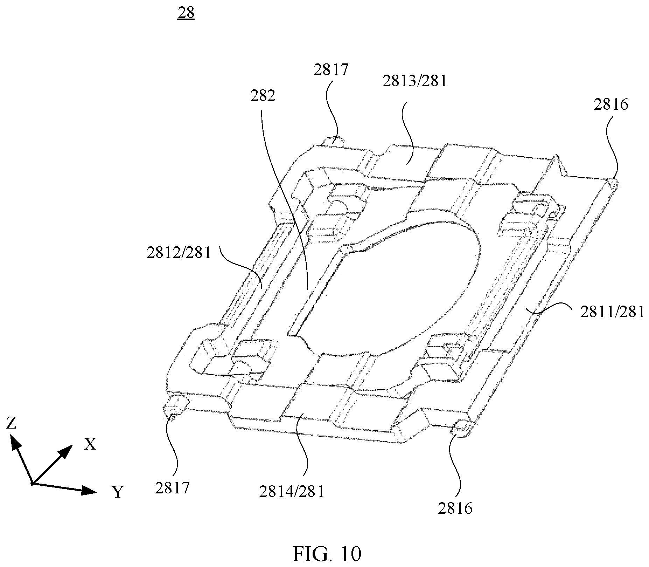

Refer to FIG. 6 and FIG. 10, the lifting/lowering assembly 28 includes a first support 281 and a second support 282. The first support 281 is connected to the second support 282. In some embodiments, for example, the first support 281 and the second support 282 are disposed crosswise in an X shape, and the first support 281 is hingedly connected to the second support 282. Of course, the connection between the first support 281 and the second support 282 is not limited to the hinged connection. Those skilled in the art can set the connection between the first support 281 and the second support 282 according to actual conditions. In embodiments of this application, an example in which the first support 281 and the second support 282 are disposed crosswise in an X shape, and the first support 281 is hingedly connected to the second support 282 is used for description. Refer to 11, the first support 281 includes a first sliding end 2811 and a first rotating end 2812, and further includes a first side wall 2813 and a second side wall 2814 respectively connected to the first sliding end 2811 and the first rotating end 2812. In the Y-axis direction, the first sliding end 2811 is opposite to the first rotating end 2812, and in the X-axis direction, the first side wall 2813 is opposite to the second side wall 2814, in other words, the first sliding end 2811, the first side wall 2813, the first rotating end 2812, and the second side wall 2814 are connected end to end. In addition, the first sliding end 2811, the first side wall 2813, the first rotating end 2812, and the second side wall 2814 form a first accommodating cavity 2815. For example, the second support 282 is accommodated in the first accommodating cavity 2815.

It should be noted that, the first sliding end 2811, the first side wall 2813, the first rotating end 2812, and the second side wall 2814 can be integrally formed. The first sliding end 2811, the first side wall 2813, the first rotating end 2812, and the second side wall 2814 can also be formed separately and fixed together by welding or bonding. In embodiments of this application, an example in which the first sliding end 2811, the first side wall 2813, the first rotating end 2812, and the second side wall 2814 are integrally formed is used for description.

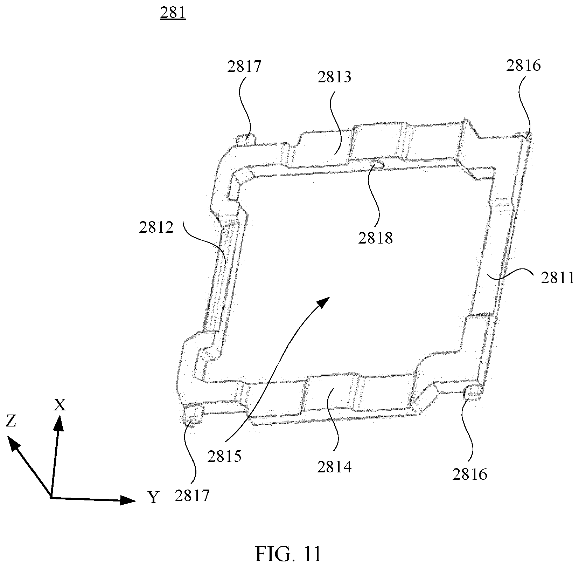

Continue to refer to FIG. 11, in the X-axis direction, two first clamping shafts 2816 are provided on the first sliding end 2811. In the X-axis direction, the two first clamping shafts 2816 are respectively provided on two opposite sides of the first sliding end 2811 and are opposite to each other. For example, a local protrusion of the first sliding end 2811 forms each first clamping shaft 2816. In the X-axis direction, two second clamping shafts 2817 are separately provided on the first rotating end 2812. In the X-axis direction, the two second clamping shafts 2817 are respectively provided on two opposite sides of the first rotating end 2812 and are opposite to each other. For example, a local protrusion of the first rotating end 2812 forms each second clamping shaft 2817. Of course, the first clamping shaft 2816 can also be fixed to the first sliding end 2811, and the second clamping shaft 2817 an also be fixed to the first rotating end 2812 by welding or bonding. One of the first clamping shafts 2816 is located in a sliding slot 2732 in one of the first clamping sub-parts 2731, and the other first clamping shaft 2816 is located in a sliding slot 2732 in the other first clamping sub-part 2731, so that the two first clamping shafts 2816 are slidingly connected to the two first clamping sub-parts 2731 (shown in FIG. 8) in a one-to-one correspondence. In other words, the two first clamping shafts 2816 can slide, in the Y-axis, in each sliding slot 2732 in the two first clamping sub-parts 2731. In addition, because each first clamping sub-part 2731 clamps each first clamping shaft 2816, there is a specific gap between the first sliding end 2811 and the inner surface 272, so that the first clamping shaft 2816 can slide to avoid jamming keys and affect a hand feeling.

The two second clamping shafts 2817 are rotatably connected to a first hook of the support plate 24 (described in detail below).

Continue to refer to FIG. 11, limiting holes 2818 are respectively provided on the first side wall 2813 and the second side wall 2814, and opening directions of the two limiting holes 2818 are opposite.

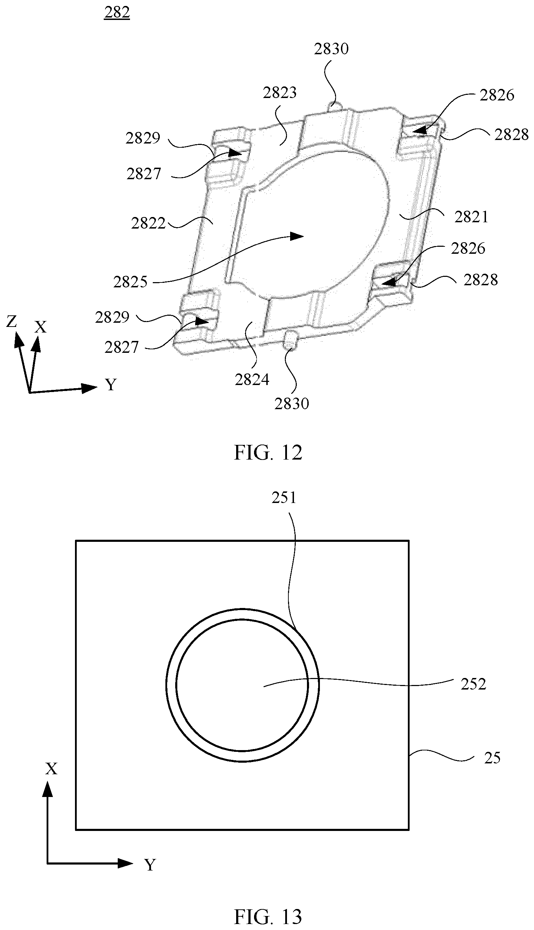

Refer to FIG. 12, the second support 282 includes a second sliding end 2821 and a second rotating end 2822, and further includes a third side wall 2823 and a fourth side wall 2824 respectively connected to the second sliding end 2821 and the second rotating end 2822. In the Y-axis direction, the second sliding end 2821 and the second rotating end 2822, and in the X-axis direction, the third side wall 2823 is opposite to the fourth side wall 2824, in other words, the second sliding end 2821, the third side wall 2823, the second rotating end 2822, and the fourth side wall 2824 are connected end to end. In addition, the second sliding end 2821, the third side wall 2823, the second rotating end 2822, and the fourth side wall 2824 form a second accommodating cavity 2825.

It should be noted that, the second sliding end 2821, the third side wall 2823, the second rotating end 2822, and the fourth side wall 2824 can be integrally formed. The second sliding end 2821, the third side wall 2823, the second rotating end 2822, and the fourth side wall 2824 can also be formed separately and fixed together by welding or bonding. In embodiments of this application, an example in which the second sliding end 2821, the third side wall 2823, the second rotating end 2822, and the fourth side wall 2824 are integrally formed is used for description.

Continue to refer to FIG. 12, in the X-axis direction, two first mounting slots 2826 are provided at two opposite ends of the second sliding end 2821, and two second mounting slots 2827 are provided at two opposite ends of the second rotating end 2822. Each first mounting slot 2826 is provided with a third clamping shaft 2828, and each second mounting slot 2827 is provided with a fourth clamping shaft 2829.

Two third clamping shafts 2828 are slidingly connected to a second hook of the support plate 24 (described in detail below).

One of the fourth clamping shafts 2829 is located in a clamping slot 2741d in one of the second clamping sub-parts 2741, and the other fourth clamping shaft 2829 is located in a clamping slot 2741d in the other second clamping sub-part 2741, so that the two fourth clamping shafts 2829 are rotatably connected to the two second clamping sub-parts 2741 (shown in FIG. 8) in a one-to-one correspondence. In other words, the two fourth clamping shafts 2829 can rotate in each clamping slot 2741d in the two first clamping sub-parts 2741. In addition, because each second clamping sub-part 2741 clamps each fourth clamping shaft 2829, there is a specific gap between the second rotating end 2822 and the inner surface 272, so that the fourth clamping shaft 2829 can slide to avoid jamming keys and affect a hand feeling.

Continue to refer to FIG. 12, rotating shafts 2830 are respectively provided on the third side wall 2823 and the fourth side wall 2824. The two rotating shafts 2830 are respectively located on two opposite sides of the third side wall 2823 and the fourth side wall 2824 and are opposite to each other. The two rotating shafts 2830 of the second support 282 are respectively mounted in the two limiting holes 2818 of the first support 281 to implement the connection between the first support 281 and the second support 282, and each rotating shaft 2830 can rotate in the limiting hole 2818, so that the lifting/lowering assembly 28 can be unfolded or folded according to applied force.

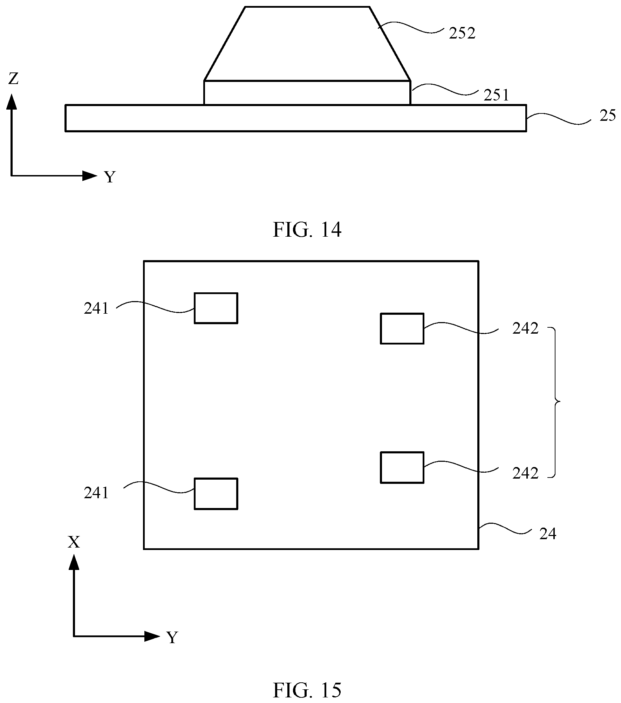

Refer to FIG. 13 and FIG. 14, a switch circuit 251 is disposed on a flexible circuit board 25. When each key 26 is pressed, contacts in the switch circuit 251 on the flexible circuit board 25 that are originally in an open-circuit state can be connected, thereby achieving an input function corresponding to the key. To provide elasticity and hand feeling of the key, the flexible circuit board 25 is further provided with a silicone contact 252 located between the flexible circuit board 25 and an inner surface 272, and in a Z-axis direction, one end of the silicone contact 252 abuts against the flexible circuit board 25, and the other end passes through a second accommodating cavity 2825 of the lifting/lowering support 28 and abuts against the inner surface 272. When the key 26 is not pressed, due to the key cap 27 is light, the silicone contact 252 undergoes slight deformation to provide elastic support for the key cap 27 that is not pressed. When the key 26 is pressed, the silicone contact 252 is compressed and elastically deformed, thereby connecting the contacts in the switch circuit 251 on the flexible circuit board 25 that are originally in an open-circuit state, and accumulating elastic force to provide resilience for the key cap 27.

It should be noted that, the silicone contact 252 is only an example in embodiments of this application. **In** other optional embodiments, a spring or a firing spring can also be used to provide the elastic force for the key.

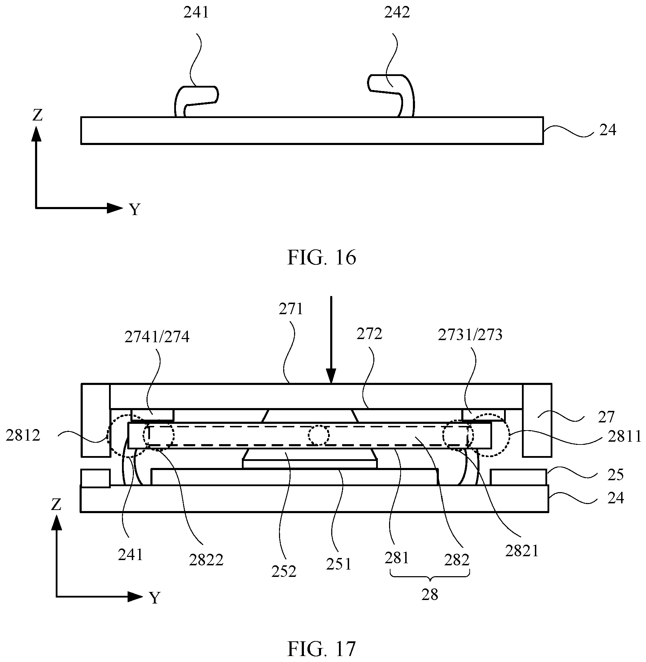

Refer to FIG. 15 and FIG. 16, in a Y-axis direction, first hooks 241 and second hooks 242 are provided at two opposite ends of a support plate 24. A quantity of both the first hooks 241 and the second hooks 242 is two. **In** an X-axis direction, the two first hooks 241 are respectively provided at two opposite ends of the support plate 24, and the two second hooks 242 are provided at two opposite ends of the support plate 24.

One of second clamping shafts 2817 is located in one of the first hooks 241, and the other second clamping shaft 2817 is located in the other first hook 241, so that the two second clamping shafts 2817 (shown in FIG. 10) are rotatably connected to the two first hooks 241 in a one-to-one correspondence, that is, the two second clamping shafts 2817 can rotate on the two first hooks 241. One of third clamping shafts 2828 is located in one of the second hooks 242, and the other third clamping shaft 2828 is located in the other second hook 242, so that the two third clamping shafts 2828 (shown in FIG. 10) are slidingly connected to the two second hooks 242 in a one-to-one correspondence, that is, the two third clamping shafts 2828 can slide on the two second hooks 242 in the Y-axis.

In this embodiment, continue to refer to FIG. 6, when the key cap 27 is not pressed, that is, when no force is applied to the key cap 27, the lifting/lowering assembly 28 is in an expanded state of extending vertically and retracting laterally. In this case, there is a maximum distance between the key cap 27 and the support plate 24. Refer to FIG. 17, when a key cap 27 is pressed, that is, when force is applied to the key cap 27, two first clamping shafts 2816 of a first sliding end 2811 slide, in a Y-axis, in sliding slots 2732 in two first clamping sub-parts 2731 on an inner surface 272 of the key cap 27. Two second clamping shafts 2817 of a first rotating end 2812 rotate on first hooks 241 on a support plate 24, two third clamping shafts 2828 of a second sliding end 2821 slide, in the Y-axis, on second hooks 242 on the support plate 24, and two fourth clamping shafts 2829 of a second rotating end 2822 rotate in clamping slots 2741d of two second clamping sub-parts 2741 on the inner surface 272 of the key cap 27, so that a lifting/lowering assembly 28 is in a folded state of retracted vertically and unfolded laterally. In this case, there is a minimum distance between the key cap 27 and the support plate 24. When force is applied to the key cap 27, the key cap 27 changes from a static state to a fast moving state, that is, moves quickly toward the support plate 24. When decelerating to zero, the lifting/lowering assembly 28 is in a folded state of retracting vertically and unfolding laterally. When the key cap 27 moves until it decelerates to zero, the first rotating end 2812 of a first support 281 and the second sliding end 2821 of a second support 282 may collide with the key cap 27 due to large impact noise, thereby causing larger impact noise.

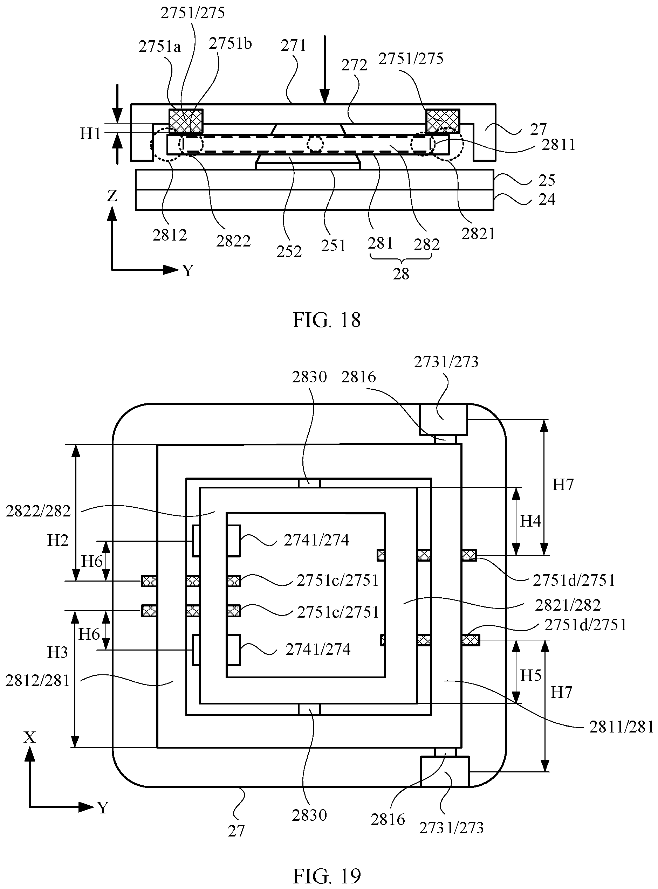

With reference to FIG. 18 and FIG. 19, when the lifting/lowering assembly 28 is in the folded state of retracting vertically and unfolding laterally, orthographic projections of the first rotating end 2812 of the first support 281 and the second sliding end 2821 of the second support 282 on the inner surface 272 overlap with orthographic projections of buffer strips 2751 on the inner surface 272. In this way, when force is applied to the key cap 27, the first rotating end 2812 of the first support 281 is in contact with each buffer strip 2751, and the second sliding end 2821 of the second support 282 is in contact with each buffer strip 2751, a collision between the key cap 27 and the lifting/lowering assembly 28 is buffered by using the buffer strip 2751, thereby lowering the sound of key tapping, preventing the lifting/lowering assembly 28 from being in contact with the key cap 27, causing large impact noise, and improving user experience.

It can be learned from the above that because the first clamping sub-part 2731 clamps the first clamping shaft 2816, there is a specific gap between the first sliding end 2811 and the inner surface 272, and because the second clamping sub-part 2741 clamps the fourth clamping shaft 2829, there is a specific gap between the second rotating end 2822 and the inner surface 272. Therefore, when the key cap 27 moves until it decelerates to zero, the first sliding end 2811 of the first support 281 and the second rotating end 2822 of the second support 282 may also collide with the key cap 27 due to a large impact, thereby causing large impact noise.

Based on this, continue to refer to FIG. 18 and FIG. 19, the buffer strips 2751 extend between two first clamping sub-parts 2731 and between two second clamping sub-parts 2741. When the buffer strips 2751 extend between two first clamping sub-parts 2731 and between two second clamping sub-parts 2741, orthographic projections of a first sliding end 2811 of the first support 281 and a second rotating end 2822 of the second support 282 on the inner surface 272 also overlap with the orthographic projections of the buffer strips 2751 on the inner surface 272. In this way, the buffer strips 2751 can also buffer a collision between the first sliding end 2811 of the first support 281 and the second rotating end 2822 of the second support 282 as well as the key cap 27, further lowering the sound of key tapping.

To prevent the buffer strips 2751 from affecting sliding of the first sliding end 2811 of the first support 281 and a rotation of the second rotating end 2822 of the second support 282. Continue to refer to FIG. 18, in the Z-axis direction, each first buffer strip 2751 includes a first surface 2751a and a second surface 2751b opposite to the first surface 2751a, and the second surface 2751b is located on one side of the first surface 2751a facing away from an outer surface 271. A distance H1 from the second surface 2751b to the inner surface 272 is less than or equal to 0.15 mm. In other words, a thickness of the buffer strip 2751 is small, with the arrangement, a buffering function may be achieved without affecting a movement of the lifting/lowering assembly 28.

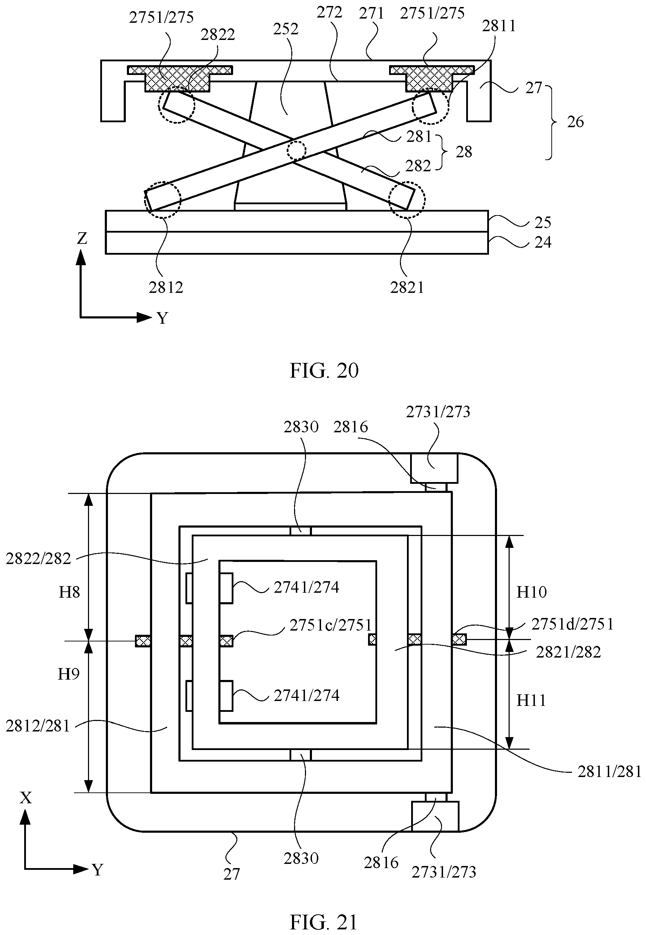

For the formation of the buffer strip 2751, in embodiments of this application, the formation of the buffer strip 2751 is limited. For example, the buffer strip 2751 can be formed by attaching adhesive, using a glue dispensing process, or a two-color injection molding process (for example, refer to FIG. 20). A material of the buffer strip 2751 includes, for example, hot melt adhesive, thermoplastic polyurethanes (TPU, Thermoplastic polyurethanes) elastic rubber, or silicone.

In embodiments of this application, disposing positions and a quantity of the buffer strips 2751 are not limited, and those skilled in the art can set the positions and the quantity according to actual conditions.

In a possible implementation, continue to refer to FIG. 19, a first buffer structure 275 includes four buffer strips 2751, two of which are first buffer strips 2751c, and the other two buffer strips are second buffer strips 2751d. When the lifting/lowering assembly 28 is in the folded state of retracting vertically and unfolding laterally, the orthographic projection of the first rotating end 2812 of the first support 281 on the inner surface 272 overlaps with the orthographic projection of the first buffer strip 2751c on the inner surface 272. In addition, the orthographic projection of the second sliding end 2821 of the second support 282 on the inner surface 272 overlaps with the orthographic projection of a second buffer strip 2751d on the inner surface 272. In this way, when the key cap 27 is pressed, the first rotating end 2812 of the first support 281 is in contact with two first buffer strips 2751c to prevent the first rotating end 2812 of the first support 281 from being in contact with the key cap 27, thereby causing larger impact noise, and the second sliding end 2821 of the second support 282 is in contact with two second buffer strips 2751d to prevent the second sliding end 2821 of the second support 282 from being in contact with the key cap 27, thereby causing large impact noise.

In addition, a distance from the two first buffer strips 2751c to two opposite sides of the first rotating end 2812 is the same, that is, a distance from one of the first buffer strips 2751c to one side of the first rotating end 2812 is H2, and a distance from one of the first buffer strips 2751c to one side of the first rotating end 2812 is H3, where H2 is equal to H3. In addition, a distance from the two second buffer strips 2751d to two opposite sides of the second sliding end 2821 of the second support 282 is the same, that is, a distance from one of the second buffer strips 2751d to one side of the first second sliding end 2821 is H4, a distance from one of the second buffer strips 2751d to one side of the second sliding end 2821 is H5, where H4 is equal to H5. With the arrangement, costs can be reduced with a small quantity of buffer strips 2751. In addition, stability of the first rotating end 2812 and the second sliding end 2821 during pressing can be improved.

In this case, continuing to refer to FIG. 19, the first buffer strips 2751c extend between the two second clamping sub-parts 2741, and the second buffer strips 2751d extend between the two first clamping sub-parts 2731. A minimum distance H6 from the two first buffer strips 2751c to the two second clamping sub-parts 2741 is greater than or equal to 2 mm, and a minimum distance H7 from the two second buffer strips 2751d to the two first clamping sub-part 2731 is greater than or equal to 2 mm. In other words, there is a specific distance between each buffer strip 2751 and each first clamping sub-part 2731 as well as each second clamping sub-part 2741. In this way, a first clamping shaft 2816 of the first sliding end 2811 is not be affected to slide, in the Y-axis, in a sliding slot 2732 in the first clamping sub-part 2731, and a second clamping shaft 2817 of the first rotating end 2812 is not be affected to rotate in a clamping slot 2741d of the second clamping sub-part 2741, thereby avoiding jamming keys.

In another possible implementation, refer to FIG. 21, a plurality of buffer strips 2751 include two buffer strips 2751, two of which are the first buffer strip 2751c and the second buffer strip 2751d. When the lifting/lowering assembly 28 is in the folded state of retracting vertically and unfolding laterally, the orthographic projection of the first rotating end 2812 of the first support 281 on the inner surface 272 overlaps with the orthographic projection of the first buffer strip 2751c on the inner surface 272. In addition, the orthographic projection of the second sliding end 2821 of the second support 282 on the inner surface 272 overlaps with the orthographic projection of a second buffer strip 2751d on the inner surface 272. In this way, when the key cap 27 is pressed, the first rotating end 2812 of the first support 281 is in contact with two first buffer strips 2751c to prevent the first rotating end 2812 of the first support 281 from being in contact with the key cap 27, thereby causing larger impact noise, and the second sliding end 2821 of the second support 282 is in contact with two second buffer strips 2751d to prevent the second sliding end 2821 of the second support 282 from being in contact with the key cap 27, thereby causing large impact noise.

In addition, a distance from two opposite sides of the first rotating end 2812 of the first support 281 to the first buffer strip 2751c is the same, that is, a distance from one side of the first rotating end 2812 to the first buffer strip 2751c is H8, and a distance from the other side of the first rotating end 2812 to the first buffer strip 2751c is H9, where H8 is equal to H9. Moreover, a distance from two opposite sides of the second sliding end 2821 of the second support 282 to the second buffer strip 2751d is the same, that is, a distance from one side of the second sliding end 2821 to the second buffer strip 2751d is H10, a distance from the other side of the second sliding end 2821 to the second buffer strip 2751d is H11, where H10 is equal to H11. With the arrangement, costs can further be reduced with a small quantity of buffer strips 2751.

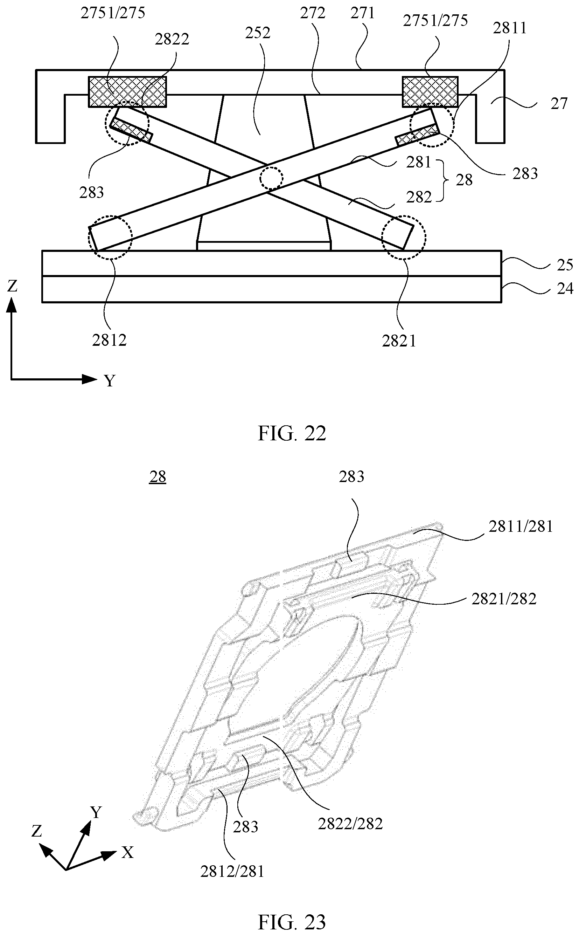

It is considered that when the key cap 27 and the lifting/lowering assembly 28 are pressed, the first sliding end 2811 of the first support 281 and the second rotating end 2822 of the second support 282 may collide with the support plate 24, thereby causing impact noise. Based on this, refer to FIG. 22 and FIG. 23, in a Z-axis direction, second buffer structures 283 are provided on one side of the first sliding end 2811 of the first support 281 and the second rotating end 2822 of the second support 282 facing away from the inner surface 272. When the lifting/lowering assembly 28 is in the folded state of retracting vertically and unfolding laterally, the support plate 24 is in contact with one of the second buffer structures 283 on the first sliding end 2811 and the other one of the second buffer structures 283 on the second rotating end 2822, in a process of the key cap 27 moving until it decelerates to zero, it is possible to prevent the first sliding end 2811 of the first support 281 and the second rotating end 2822 of the second support 282 from colliding with the support plate 24 due to a large impact, thereby causing large impact noise.

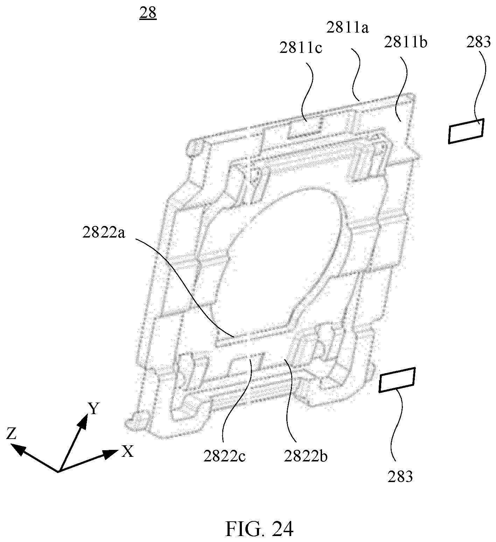

In this case, with reference to FIG. 24, to increase a bonding area between each second buffer structure 283 and the first support 281 as well as the second support 282, in the Z-axis direction, the first sliding end 2811 includes a third surface 2811a and a fourth surface 2811b opposite to the third surface 2811a, and the fourth surface 2811b is located on one side of the third surface 2811a facing away from the inner surface 272 of the key cap 27. The second rotating end 2822 includes a fifth surface 2822a and a sixth surface 2822b opposite to the fifth surface 2822a, and the sixth surface 2822b is located on one side of the fifth surface 2822a facing away from the inner surface 272 of the key cap 27. The first sliding end 2811 is provided with a second slot 2811c. The first sliding end 2811 is partially recessed from the fourth surface 2811b in a direction from the fourth surface 2811b to the third surface 2811a, to form the second slot 2811c. The second rotating end 2822 includes a third slot 2822c. The second rotating end 2822 is partially recessed from the sixth surface 2822b in a direction from the sixth surface 2822b to the fifth surface 2822a, to form the third slot 2822c. One of the second buffer structures 283 located on the first sliding end 2811 is located in the second slot 2811c, and the other one of the second buffer structures 283 located on the second rotating end 2822 is located in the third slot 2822c.

In this case, the second buffer structure 283 located in the second slot 2811c may be flush with the fourth surface 2811b, and the second buffer structure 283 located in the third slot 2822c is flush with the sixth surface 2822b. Alternatively, the second buffer structure 283 located in the second slot 2811c protrudes from the fourth surface 2811b, and the second buffer structure 283 located in the third slot 2822c protrudes from the sixth surface 2822b. When the second buffer structure 283 located in the second slot 2811c protrudes from the fourth surface 2811b, and when the second buffer structure 283 located in the third slot 2822c protrudes from the sixth surface 2822b, the first sliding end 2811 of the first support 281 and the second rotating end 2822 of the second support 282 can be enabled to not be in contact with the support plate 24, thereby avoiding a collision.

In embodiments of this application, disposing positions, shapes, and a quantity of the second buffer structures 283 are not limited.

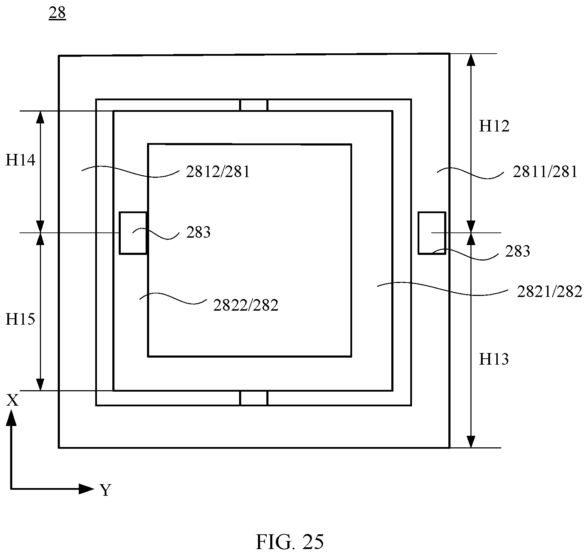

In a possible implementation, refer to FIG. 25, second buffer structures 283 are long-strip-shape, an extending direction of each second buffer structure 283 is parallel to an X-axis, and a quantity of second buffer structures 283 located on a first sliding end 2811 of a first support 281 and a quantity of second buffer structures 283 located on a second rotating end 2822 of a second support 282 are both one. In addition, a distance from the second buffer structure 283 located on the first sliding end 2811 to two opposite sides of the first sliding end 2811 is the same, that is, a distance from one side of the first sliding end 2811 to the second buffer structure is H12, a distance from the other side of the first sliding end 2811 to the second buffer structure is H13, where H12 is equal to H13, and a distance from the second buffer structure located on the second rotating end 2822 to two opposite sides of the second rotating end 2822 is the same, that is, a distance from one side of the second rotating end 2822 to the second buffer structure is H14, and a distance from the other side of the second rotating end 2822 to the second buffer structure is H15, where H14 is equal to H15. With the arrangement, costs and an assembly process can be reduced with a small quantity of the second buffer structures 283.

As mentioned above, the foregoing embodiments are only used to illustrate the technical solution of this application, but are not intended to limit this application.

## Claims

1. A keyboard (22), comprising:
a support plate (24); and
a plurality of keys (26), located on one side of the support plate (24), wherein each key (26) comprises a key cap (27) and a lifting/lowering assembly (28), and the lifting/lowering assembly (28) is located between the support plate (24) and the key cap (27);
the key cap (27) comprises an outer surface (271) and an inner surface (272) opposite to the outer surface (271), and a first clamping part (273) and a second clamping part (274) are provided on the inner surface (272); and
the lifting/lowering assembly (28) comprises a first support (281) and a second support (282), wherein the first support (281) and the second support (282) each comprise a first end and a second end, the first end of the first support (281) is connected to the first clamping part (273), the second end of the first support (281) is connected to the support plate (24), the first end of the second support (282) is connected to the second clamping part (274), and the second end of the second support (282) is connected to the support plate (24); and
a first buffer structure (275) is further provided on the inner surface (272) of the key cap (27), and when the key cap (27) is pressed, the second end of the first support (281) is in contact with the first buffer structure (275), and the second end of the second support (282) is in contact with the first buffer structure (275), wherein second buffer structures (283) are provided on both the first end of the first support (281) and the first end of the second support (282); and when the key cap (27) is pressed, the support plate (24) is in contact with one of the second buffer structures (283) located on the first end of the first support (281) and the other one of the second buffer structures (283) located on the first end of the second support (282).

2. The keyboard (22) according to claim 1, wherein the first clamping part (273) comprises two first clamping sub-parts (2731) located at two opposite ends of the inner surface (272), and the second clamping part (274) comprises two second clamping sub-parts (2741) located at two opposite ends of the inner surface (272);
the first support (281) comprises a first sliding end (2811) and a first rotating end (2812);
the first end of the first support (281) is the first sliding end (2811), the first sliding end (2811) comprises two first clamping shafts (2816), and the two first clamping shafts (2816) are slidingly connected to the two first clamping sub-parts (2731) in a one-to-one correspondence;
the second end of the first support (281) is the first rotating end (2812), and the first rotating end (2812) is rotatably connected to the support plate (24);
the second support (282) comprises a second sliding end (2821) and a second rotating end (2822);
the first end of the second support (282) is the second rotating end (2822), the second rotating end (2822) comprises two second clamping shafts (2817), and the two second clamping shafts (2817) are rotatably connected to the two second clamping sub-parts (2741) in a one-to-one correspondence; and
the second end of the second support (282) is the second sliding end (2821), and the second sliding end (2821) is slidingly connected to the support plate (24).

3. The keyboard (22) according to claim 2, wherein the first buffer structure (275) extends between the two first clamping sub-parts (2731) and between the two second clamping sub-parts (2741).

4. The keyboard (22) according to any one of claims 1 to 3, wherein the key cap (27) comprises a first slot (276), and the key cap (27) is partially recessed from the inner surface (272) in a direction from the inner surface (272) to the outer surface (271), to form the first slot (276); and
the first buffer structure (275) is located in the first slot (276).

5. The keyboard (22) according to claim 4, wherein the first buffer structure (275) protrudes from the inner surface (272).

6. The keyboard (22) according to any one of claims 1 to 3, wherein the first buffer structure (275) comprises a plurality of buffer strips (2751); and
when the key cap (27) is pressed, the second end of the first support (281) is in contact with at least one of the buffer strips (2751), and the second end of the second support (282) is in contact with at least one of the buffer strips (2751).

7. The keyboard (22) according to claim 6, wherein the first buffer structure (275) comprises two buffer strips (2751), and the two buffer strips (2751) comprise a first buffer strip (2751c) and a second buffer strip (2751d);
when the key cap (27) is pressed, the second end of the first support (281) is in contact with the first buffer strip (2751c), and the second end of the second support (282) is in contact with the second buffer strip (2751d); and
a distance from two opposite sides of the second end of the first support (281) to the first buffer strip (2751c) is the same, and a distance from two opposite sides of the second end of the second support (282) to the second buffer strip (2751d) is the same.

8. The keyboard (22) according to claim 6, wherein the first buffer structure (275) comprises two first buffer strips (2751c) and two second buffer strips (2751d);
when the key cap (27) is pressed, the second end of the first support (281) is in contact with the two first buffer strips (2751c), and the second end of the second support (282) is in contact with the two second buffer strips (2751d); and
a distance from the two first buffer strips (2751c) to two opposite sides of the second end of the first support (281) is the same, and a distance from the two second buffer strips (2751d) to two opposite sides of the second end of the second support (282) is the same.

9. The keyboard (22) according to claim 8, wherein the first buffer strip (2751c) extends between the two second clamping sub-parts (2741) and the second buffer strip (2751d) extends between the two first clamping sub-parts (2731); and
a minimum distance from the first buffer strip (2751c) to the second clamping sub-part (2741) is greater than or equal to 2 mm, and a minimum distance from the second buffer strip (2751d) to the first clamping sub-part (2731) is greater than or equal to 2 mm.

10. The keyboard (22) according to claim 1, wherein the first buffer structure (275) comprises a first surface (2751a) and a second surface (2751b) opposite to the first surface (2751a), and the second surface (2751b) is located on one side of the first surface (2751a) facing away from the outer surface (271); and
a distance from the second surface (2751b) to the inner surface (272) is less than or equal to 0.15 mm.

11. The keyboard (22) according to claim 1, wherein the first buffer structure (275) is formed by using a glue dispensing process and a two-color injection molding process.

12. The keyboard (22) according to claim 1, wherein the first support (281) comprises a third surface (2811a) and a fourth surface (2811b) opposite to the third surface (2811a), and the fourth surface (2811b) is located on one side of the third surface (2811a) facing away from the inner surface (272); and the second support (282) comprises a fifth surface (2822a) and a sixth surface (2822b) opposite to the fifth surface (2822a), and the sixth surface (2822b) is located on one side of the fifth surface (2822a) facing away from the inner surface (272);
the first end of the first support (281) is provided with a second slot (2811c), and the first support (281) is partially recessed from the fourth surface (2811b) in a direction from the fourth surface (2811b) to the third surface (2811a), to form the second slot (2811c);
the first end of the second support (282) comprises a third slot (2822c), and the second support (282) is partially recessed from the sixth surface (2822b) in a direction from the sixth surface (2822b) to the fifth surface (2822a), to form the third slot (2822c);
the second buffer structure (283) located on the first end of the first support (281) is located in the second slot (2811c); and
the second buffer structure (283) located on the first end of the second support (282) is located in the third slot (2822c).

13. The keyboard (22) according to claim 12, wherein the second buffer structure (283) located in the second slot (2811c) protrudes from the fourth surface (2811b), and the second buffer structure (283) located in the third slot (2822c) protrudes from the sixth surface (2822b).

14. The keyboard (22) according to any one of claims 12 to 13, wherein a distance from the second buffer structure (283) located on the first end of the first support (281) to two opposite sides of the first end of the first support (281) is the same; and
a distance from the second buffer structure (283) located on the first end of the second support (282) to two opposite sides of the first end of the second support (282) is the same.

15. An electronic device, comprising the keyboard (22) according to any one of claims 1 to 14.

## Patentansprüche

1. Eine Tastatur (22), umfassend:
eine Trägerplatte (24); und
eine Vielzahl von Tasten (26), die sich auf einer Seite der Trägerplatte (24) befinden, wobei jede Taste (26) eine Tastenabdeckung (27) und eine Hebe-/Senkvorrichtung (28) umfasst, und die Hebe-/Senkvorrichtung (28) zwischen der Trägerplatte (24) und der Tastenabdeckung (27) angeordnet ist;
die Tastenabdeckung (27) umfasst eine Außenfläche (271) und eine gegenüberliegende Innenfläche (272), und auf der Innenfläche (272) sind ein erster Klemmteil (273) und ein zweiter Klemmteil (274) vorgesehen; und
die Hebe-/Senkvorrichtung (28) umfasst eine erste Stütze (281) und eine zweite Stütze (282), wobei sowohl die erste Stütze (281) als auch die zweite Stütze (282) jeweils ein erstes und ein zweites Ende aufweisen, das erste Ende der ersten Stütze (281) ist mit dem ersten Klemmteil (273) verbunden, das zweite Ende der ersten Stütze (281) ist mit der Trägerplatte (24) verbunden, das erste Ende der zweiten Stütze (282) ist mit dem zweiten Klemmteil (274) verbunden und das zweite Ende der zweiten Stütze (282) ist mit der Trägerplatte (24) verbunden; und
auf der Innenfläche (272) der Tastenabdeckung (27) ist ferner eine erste Pufferstruktur (275) vorgesehen, und wenn die Tastenabdeckung (27) gedrückt wird, ist das zweite Ende der ersten Stütze (281) mit der ersten Pufferstruktur (275) in Kontakt, ebenso das zweite Ende der zweiten Stütze (282) mit der ersten Pufferstruktur (275) in Kontakt, wobei an beiden ersten Enden der ersten Stütze (281) und der zweiten Stütze (282) zweite Pufferstrukturen (283) vorgesehen sind; und wenn die Tastenabdeckung (27) gedrückt wird, ist die Trägerplatte (24) mit einer der zweiten Pufferstrukturen (283) am ersten Ende der ersten Stütze (281) und mit der anderen der zweiten Pufferstrukturen (283) am ersten Ende der zweiten Stütze (282) in Kontakt.

2. Die Tastatur (22) nach Anspruch 1, wobei der erste Klemmteil (273) zwei erste Klemmunterteile (2731) umfasst, die sich an zwei gegenüberliegenden Enden der Innenfläche (272) befinden, und der zweite Klemmteil (274) zwei zweite Klemmunterteile (2741) umfasst, die sich an zwei gegenüberliegenden Enden der Innenfläche (272) befinden;
die erste Stütze (281) umfasst ein erstes gleitendes Ende (2811) und ein erstes drehendes Ende (2812);
das erste Ende der ersten Stütze (281) ist das erste gleitende Ende (2811), das erste gleitende Ende (2811) umfasst zwei erste Klemmwellen (2816), und die zwei ersten Klemmwellen (2816) sind in einer Eins-zu-eins-Zuordnung gleitend mit den zwei ersten Klemmunterteilen (2731) verbunden;
das zweite Ende der ersten Stütze (281) ist das erste drehende Ende (2812), und das erste drehende Ende (2812) ist drehbar mit der Trägerplatte (24) verbunden;
Die zweite Stütze (282) umfasst ein zweites Gleitenede (2821) und ein zweites Drehende (2822);
Das erste Ende der zweiten Stütze (282) ist das zweite Drehende (2822), das zweite Drehende (2822) umfasst zwei zweite Klemmwellen (2817) und die beiden zweiten Klemmwellen (2817) sind drehbar jeweils mit den beiden zweiten Klemm-Unterteilen (2741) verbunden; und
Das zweite Ende der zweiten Stütze (282) ist das zweite Gleitenede (2821), und das zweite Gleitenede (2821) ist gleitend mit der Stützplatte (24) verbunden.

3. Die Tastatur (22) nach Anspruch 2, wobei die erste Pufferstruktur (275) zwischen den beiden ersten Klemm-Unterteilen (2731) und zwischen den beiden zweiten Klemm-Unterteilen (2741) verläuft.

4. Die Tastatur (22) nach einem der Ansprüche 1 bis 3, wobei die Tastenabdeckung (27) einen ersten Schlitz (276) umfasst, und die Tastenabdeckung (27) ist von der Innenfläche (272) in Richtung von der Innenfläche (272) zur Außenfläche (271) teilweise eingesenkt, um den ersten Schlitz (276) zu bilden; und
Die erste Pufferstruktur (275) befindet sich im ersten Schlitz (276).

5. Die Tastatur (22) nach Anspruch 4, wobei die erste Pufferstruktur (275) aus der Innenfläche (272) hervorsteht.

6. Die Tastatur (22) nach einem der Ansprüche 1 bis 3, wobei die erste Pufferstruktur (275) eine Vielzahl von Pufferstreifen (2751) umfasst; und
Wenn die Tastenabdeckung (27) gedrückt wird, steht das zweite Ende der ersten Stütze (281) mit wenigstens einem der Pufferstreifen (2751) in Kontakt, und das zweite Ende der zweiten Stütze (282) steht mit wenigstens einem der Pufferstreifen (2751) in Kontakt.

7. Die Tastatur (22) nach Anspruch 6, wobei die erste Pufferstruktur (275) zwei Pufferstreifen (2751) umfasst und die beiden Pufferstreifen (2751) einen ersten Pufferstreifen (2751c) und einen zweiten Pufferstreifen (2751d) umfassen;
Wenn die Tastenabdeckung (27) gedrückt wird, steht das zweite Ende der ersten Stütze (281) mit dem ersten Pufferstreifen (2751c) in Kontakt und das zweite Ende der zweiten Stütze (282) mit dem zweiten Pufferstreifen (2751d) in Kontakt; und
Der Abstand von zwei gegenüberliegenden Seiten des zweiten Endes der ersten Stütze (281) zum ersten Pufferstreifen (2751c) ist gleich, und der Abstand von zwei gegenüberliegenden Seiten des zweiten Endes der zweiten Stütze (282) zum zweiten Pufferstreifen (2751d) ist gleich.

8. Die Tastatur (22) nach Anspruch 6, wobei die erste Pufferstruktur (275) zwei erste Pufferstreifen (2751c) und zwei zweite Pufferstreifen (2751d) umfasst;
Wenn die Tastenkappe (27) gedrückt wird, steht das zweite Ende der ersten Stütze (281) mit den beiden ersten Puffermatten (2751c) in Kontakt, und das zweite Ende der zweiten Stütze (282) steht mit den beiden zweiten Puffermatten (2751d) in Kontakt; und
Der Abstand von den beiden ersten Puffermatten (2751c) zu den gegenüberliegenden Seiten des zweiten Endes der ersten Stütze (281) ist gleich, und der Abstand von den beiden zweiten Puffermatten (2751d) zu den gegenüberliegenden Seiten des zweiten Endes der zweiten Stütze (282) ist ebenfalls gleich.

9. Die Tastatur (22) gemäß Anspruch 8, wobei die erste Puffermatte (2751c) zwischen den beiden zweiten Klemmteilen (2741) verläuft und die zweite Puffermatte (2751d) zwischen den beiden ersten Klemmteilen (2731) verläuft; und
Der Mindestabstand von der ersten Puffermatte (2751c) zum zweiten Klemmteil (2741) beträgt mindestens 2 mm, und der Mindestabstand von der zweiten Puffermatte (2751d) zum ersten Klemmteil (2731) beträgt mindestens 2 mm.

10. Die Tastatur (22) gemäß Anspruch 1, wobei die erste Pufferstruktur (275) eine erste Oberfläche (2751a) und eine der ersten Oberfläche (2751a) gegenüberliegende zweite Oberfläche (2751b) umfasst, und die zweite Oberfläche (2751b) auf einer von der Außenfläche (271) abgewandten Seite der ersten Oberfläche (2751a) liegt; und
Der Abstand von der zweiten Oberfläche (2751b) zur Innenfläche (272) beträgt höchstens 0,15 mm.

11. Die Tastatur (22) gemäß Anspruch 1, wobei die erste Pufferstruktur (275) durch ein Kleberdosierverfahren und ein Zweifarben-Spritzgussverfahren gebildet ist.

12. Die Tastatur (22) gemäß Anspruch 1, wobei die erste Stütze (281) eine dritte Oberfläche (2811a) und eine der dritten Oberfläche (2811a) gegenüberliegende vierte Oberfläche (2811b) umfasst, wobei die vierte Oberfläche (2811b) auf einer von der Innenfläche (272) abgewandten Seite der dritten Oberfläche (2811a) liegt; und wobei die zweite Stütze (282) eine fünfte Oberfläche (2822a) und eine der fünften Oberfläche (2822a) gegenüberliegende sechste Oberfläche (2822b) umfasst, wobei die sechste Oberfläche (2822b) auf einer von der Innenfläche (272) abgewandten Seite der fünften Oberfläche (2822a) liegt;
Das erste Ende der ersten Stütze (281) weist einen zweiten Schlitz (2811c) auf, und die erste Stütze (281) ist teilweise von der vierten Oberfläche (2811b) in Richtung der dritten Oberfläche (2811a) vertieft, um den zweiten Schlitz (2811c) zu bilden;
Das erste Ende der zweiten Stütze (282) umfasst einen dritten Schlitz (2822c), und die zweite Stütze (282) ist teilweise von der sechsten Oberfläche (2822b) in Richtung der fünften Oberfläche (2822a) vertieft, um den dritten Schlitz (2822c) zu bilden;
Die zweite Pufferstruktur (283), die sich am ersten Ende der ersten Halterung (281) befindet, ist im zweiten Schlitz (2811c) positioniert; und
Die zweite Pufferstruktur (283), die sich am ersten Ende der zweiten Halterung (282) befindet, ist im dritten Schlitz (2822c) positioniert.

13. Die Tastatur (22) gemäß Anspruch 12, wobei die zweite Pufferstruktur (283), die sich im zweiten Schlitz (2811c) befindet, von der vierten Oberfläche (2811b) hervorsteht und die zweite Pufferstruktur (283), die sich im dritten Schlitz (2822c) befindet, von der sechsten Oberfläche (2822b) hervorsteht.

14. Die Tastatur (22) gemäß einem der Ansprüche 12 bis 13, wobei der Abstand von der zweiten Pufferstruktur (283), die sich am ersten Ende der ersten Halterung (281) befindet, zu den beiden gegenüberliegenden Seiten des ersten Endes der ersten Halterung (281) gleich ist; und
Und der Abstand von der zweiten Pufferstruktur (283), die sich am ersten Ende der zweiten Halterung (282) befindet, zu den beiden gegenüberliegenden Seiten des ersten Endes der zweiten Halterung (282) gleich ist.

15. Ein elektronisches Gerät, das die Tastatur (22) nach einem der Ansprüche 1 bis 14 umfasst.

## Revendications

1. Un clavier (22), comprenant :
une plaque de support (24) ; et
une pluralité de touches (26), situées sur un côté de la plaque de support (24), chaque touche (26) comprenant un capuchon de touche (27) et un ensemble de levage/abaissement (28), l'ensemble de levage/abaissement (28) étant situé entre la plaque de support (24) et le capuchon de touche (27) ;
le capuchon de touche (27) comprend une surface extérieure (271) et une surface intérieure (272) opposées à la surface extérieure (271), et une première partie de serrage (273) ainsi qu'une seconde partie de serrage (274) sont disposées sur la surface intérieure (272) ; et
l'ensemble de levage/abaissement (28) comprend un premier support (281) et un second support (282), chacun comprenant une première extrémité et une seconde extrémité, la première extrémité du premier support (281) étant reliée à la première partie de serrage (273), la seconde extrémité du premier support (281) étant reliée à la plaque de support (24), la première extrémité du second support (282) étant reliée à la seconde partie de serrage (274), et la seconde extrémité du second support (282) étant reliée à la plaque de support (24) ; et
une première structure d'amortissement (275) est en outre disposée sur la surface intérieure (272) du capuchon de touche (27), et lorsque le capuchon de touche (27) est enfoncé, la seconde extrémité du premier support (281) est en contact avec la première structure d'amortissement (275), et la seconde extrémité du second support (282) est en contact avec la première structure d'amortissement (275), tandis que des secondes structures d'amortissement (283) sont disposées sur la première extrémité du premier support (281) et la première extrémité du second support (282) ; lorsque le capuchon de touche (27) est enfoncé, la plaque de support (24) est en contact avec l'une des secondes structures d'amortissement (283) situées sur la première extrémité du premier support (281) et l'autre située sur la première extrémité du second support (282).

2. Le clavier (22) selon la revendication 1, dans lequel la première partie de serrage (273) comprend deux premiers sous-éléments de serrage (2731) disposés aux deux extrémités opposées de la surface intérieure (272), et la seconde partie de serrage (274) comprend deux seconds sous-éléments de serrage (2741) disposés aux deux extrémités opposées de la surface intérieure (272) ;
le premier support (281) comprend une première extrémité coulissante (2811) et une première extrémité rotative (2812) ;
la première extrémité du premier support (281) est la première extrémité coulissante (2811), laquelle comprend deux premiers axes de serrage (2816) reliés en coulissant respectivement aux deux premiers sous-éléments de serrage (2731) en correspondance un à un ;
la seconde extrémité du premier support (281) est la première extrémité rotative (2812), et la première extrémité rotative (2812) est reliée de façon rotative à la plaque de support (24) ;
le second support (282) comprend une seconde extrémité coulissante (2821) et une seconde extrémité rotative (2822);
la première extrémité du second support (282) est la seconde extrémité rotative (2822), la seconde extrémité rotative (2822) comprend deux seconds axes de serrage (2817), et les deux seconds axes de serrage (2817) sont reliés de façon rotative respectivement aux deux secondes sous-parties de serrage (2741) ; et
la seconde extrémité du second support (282) est la seconde extrémité coulissante (2821), et la seconde extrémité coulissante (2821) est reliée de façon coulissante à la plaque de support (24).

3. Le clavier (22) selon la revendication 2, dans lequel la première structure d'amortissement (275) s'étend entre les deux premières sous-parties de serrage (2731) et entre les deux secondes sous-parties de serrage (2741).

4. Le clavier (22) selon l'une quelconque des revendications 1 à 3, dans lequel le capuchon de touche (27) comprend une première rainure (276), et le capuchon de touche (27) est partiellement évidé depuis la surface intérieure (272) dans une direction allant de la surface intérieure (272) vers la surface extérieure (271), pour former la première rainure (276) ; et
la première structure d'amortissement (275) est située dans la première rainure (276).

5. Le clavier (22) selon la revendication 4, dans lequel la première structure d'amortissement (275) fait saillie depuis la surface intérieure (272).

6. Le clavier (22) selon l'une quelconque des revendications 1 à 3, dans lequel la première structure d'amortissement (275) comprend une pluralité de bandes d'amortissement (2751) ; et
lorsque le capuchon de touche (27) est pressé, la seconde extrémité du premier support (281) est en contact avec au moins l'une des bandes d'amortissement (2751), et la seconde extrémité du second support (282) est en contact avec au moins l'une des bandes d'amortissement (2751).

7. Le clavier (22) selon la revendication 6, dans lequel la première structure d'amortissement (275) comprend deux bandes d'amortissement (2751), et les deux bandes d'amortissement (2751) comprennent une première bande d'amortissement (2751c) et une seconde bande d'amortissement (2751d) ;
lorsque le capuchon de touche (27) est pressé, la seconde extrémité du premier support (281) est en contact avec la première bande d'amortissement (2751c), et la seconde extrémité du second support (282) est en contact avec la seconde bande d'amortissement (2751d) ; et
la distance entre les deux côtés opposés de la seconde extrémité du premier support (281) et la première bande d'amortissement (2751c) est identique, et la distance entre les deux côtés opposés de la seconde extrémité du second support (282) et la seconde bande d'amortissement (2751d) est identique.

8. Le clavier (22) selon la revendication 6, dans lequel la première structure d'amortissement (275) comprend deux premières bandes d'amortissement (2751c) et deux secondes bandes d'amortissement (2751d) ;
lorsque le capuchon de touche (27) est enfoncé, la seconde extrémité du premier support (281) est en contact avec les deux premières bandes tampons (2751c), et la seconde extrémité du deuxième support (282) est en contact avec les deux deuxièmes bandes tampons (2751d) ; et
la distance entre les deux premières bandes tampons (2751c) et les deux côtés opposés de la seconde extrémité du premier support (281) est identique, et la distance entre les deux deuxièmes bandes tampons (2751d) et les deux côtés opposés de la seconde extrémité du deuxième support (282) est identique.

9. Le clavier (22) selon la revendication 8, dans lequel la première bande tampon (2751c) s'étend entre les deuxièmes sous-parties de serrage (2741) et la deuxième bande tampon (2751d) s'étend entre les premières sous-parties de serrage (2731) ; et
la distance minimale entre la première bande tampon (2751c) et la deuxième sous-partie de serrage (2741) est supérieure ou égale à 2 mm, et la distance minimale entre la deuxième bande tampon (2751d) et la première sous-partie de serrage (2731) est supérieure ou égale à 2 mm.

10. Le clavier (22) selon la revendication 1, dans lequel la première structure tampon (275) comprend une première surface (2751a) et une seconde surface (2751b) opposée à la première surface (2751a), et la seconde surface (2751b) est située sur un côté de la première surface (2751a) faisant face à l'opposé de la surface externe (271) ; et
la distance entre la seconde surface (2751b) et la surface interne (272) est inférieure ou égale à 0,15 mm.

11. Le clavier (22) selon la revendication 1, dans lequel la première structure tampon (275) est réalisée par un procédé de distribution de colle et un procédé de moulage par injection bi-matière.

12. Le clavier (22) selon la revendication 1, dans lequel le premier support (281) comprend une troisième surface (2811a) et une quatrième surface (2811b) opposée à la troisième surface (2811a), et la quatrième surface (2811b) est située sur un côté de la troisième surface (2811a) faisant face à l'opposé de la surface interne (272); et le deuxième support (282) comprend une cinquième surface (2822a) et une sixième surface (2822b) opposée à la cinquième surface (2822a), et la sixième surface (2822b) est située sur un côté de la cinquième surface (2822a) faisant face à l'opposé de la surface interne (272) ;
l'extrémité avant du premier support (281) comporte une deuxième fente (2811c), et le premier support (281) est partiellement creusé à partir de la quatrième surface (2811b) dans une direction allant de la quatrième surface (2811b) vers la troisième surface (2811a), pour former la deuxième fente (2811c) ;
l'extrémité avant du deuxième support (282) comprend une troisième fente (2822c), et le deuxième support (282) est partiellement creusé à partir de la sixième surface (2822b) dans une direction allant de la sixième surface (2822b) vers la cinquième surface (2822a), afin de former la troisième fente (2822c) ;
la deuxième structure d'amortissement (283) située à la première extrémité du premier support (281) est placée dans la deuxième rainure (2811c) ; et
la deuxième structure d'amortissement (283) située à la première extrémité du second support (282) est placée dans la troisième rainure (2822c).

13. Le clavier (22) selon la revendication 12, dans lequel la deuxième structure d'amortissement (283) située dans la deuxième rainure (2811c) dépasse de la quatrième surface (2811b), et la deuxième structure d'amortissement (283) située dans la troisième rainure (2822c) dépasse de la sixième surface (2822b).

14. Le clavier (22) selon l'une quelconque des revendications 12 à 13, dans lequel la distance entre la deuxième structure d'amortissement (283), située à la première extrémité du premier support (281), et les deux bords opposés de la première extrémité du premier support (281) est identique ; et
la distance entre la deuxième structure d'amortissement (283), située à la première extrémité du second support (282), et les deux bords opposés de la première extrémité du second support (282) est identique.

15. Un dispositif électronique comprenant le clavier (22) selon l'une quelconque des revendications 1 à 14.
